# EUROPEAN PATENT SPECIFICATION

(11) **EP 1 558 450 B1**
(45) Date of publication and mention of the grant of the patent: **14.02.2007**
(21) Application number: 03775268.0
(22) Date of filing: 30.10.2003
(51) Int. Cl.: B60B 1/04

(54) **BICYCLE WHEEL**
FAHRRADRAD
ROUE DE BICYCLETTE

(30) Priority: 06.11.2002 IT BO20020700; 06.05.2003 IT BO20030048
(43) Date of publication of application: 03.08.2005
(73) Proprietor: VUELTA Italia S.r.l., 40024 Castel San Pietro Terme BO (IT)
(72) Inventor: FIORAVANTI, Moreno, I-40064 Ozzano dell'Emilia (IT)
(74) Representative: Kirschner, Klaus Dieter
(86) International application number: PCT/EP2003/012103
(87) International publication number: WO 2004/041552

(56) References cited:
- EP-A- 1 201 458
- WO-A-03/037650
- DE-C- 52 066
- FR-A- 1 047 016
- US-A- 4 529 253

## Description

The present invention relates to a bicycle wheel, particularly for racing and mountain , bicycles.

In the field of bicycle manufacturing, particularly racing bicycles and bicycles for excursions on rough and mountain terrain, wheels are known in which the hub is connected to the rim by virtue of a plurality of wire spokes, having various shapes and dimensions, and variously arranged.

Along the rim of such wheels is provided a regular distribution of fixing elements to the wire spokes, for instance nipples, which are mutually angularly equidistant by a pre-set angle. In conventional wheels these nipples are coupled alternatively to the first or to the second hub flange, so that the wire spokes cross each other regularly.

Nevertheless, wheels are recently been provided which are monolithically formed by pressure die casting, and in which the hub and the rim are manufactured in a single body and are connected by virtue of a distribution of radial elements, for instance spokes or arms having various profiles and cross sections. Wire spoke wheels and monolithic wheels have different functional characteristics (rigidity, mechanical strength, life time, streamline), which direct users choice according to their necessities, preferences and needs. As a matter of fact, wire spokes wheels can offer the great advantage of low weight, but can't have the same performances of monolithic wheels in terms of rigidity, mechanical strength and streamline.

Earlier application WO03/037650 shows a bicycle wheel which comprises a hub and a rim connected with by means of a plurality of radial elements, wherein said radial elements are grouped in a first distribution, in which said elements are arranged on one side of the wheel, and a second distribution, in which said elements are arranged on the other side of the wheel, said first and second distribution connecting said rim to respective ends of said hub, the radial elements of said first distribution being connected to said rim in respective fixing seats which are disposed alternate to the fixing seats of the radial elements of said second distribution along said rim.

US-A-4 529 253 shows a structure relating a wheel hub and a spoke assembly, in which some portion of the spokes is bent, and the two hook-shaped bent ends of the spokes are to be hooked into two adjacent rectangular holes on the wheel rim. The parallel elbow portions of each spoke are to be mounted inside the corresponding open slots on the wheel hub. The spokes are to be tightly pulled between the wheel hub and the wheel rim by means of a cylinder.

FR 1 047 016 shows the flange of a boss, comprising a drum which comprises wholes or slots at its outer lateral surface to receive the heads of the spokes of a wheel. Th spokes cross each other in between the hb and the flange of the wheel.

The present invention aims to provide a wheel, in particular for racing and mountain bicycle, which allows to obtain the typical mechanical and dynamical behavior of monolithic wheels combined with a low weight.

This aim is achieved by the present bicycle wheel as claimed in claim 1 or 4. Advantageous embodiments of the invention are characterized in the sub-claims.

The present invention provides a versatile wheel, suitable for different needs and designs as to mechanical and appearance features. The present invention also achieves a wheel being simple, relatively easy to provide in practice, safe in use, effective in operation and relatively modest in cost.

A preferred but not exclusive embodiment of a bicycle wheel, particularly for racing and mountain bicycle, will now be described which is illustrated only by way of non limiting example in the accompanying drawings, wherein:
Figure 1 is a lateral elevation view of the wheel according to the invention;
Figure 2 is a diagonal sectional view of the wheel;
Figure 3 is a detailed lateral elevation view of the wheel;
Figure 4 is a lateral elevation view of an embodiment of the wheel;
Figure 5, 6, 7 are lateral elevation views of respective embodiments of the wheel, having different number of radial elements;
Figure 8 is a lateral elevation view of a first alternative embodiment of the wheel;
Figure 8a is a lateral elevation view of a different embodiment of the wheel of Figure 8;
Figure 9,10,11 are lateral elevation views of different embodiments of the wheel of Figure 8, having different number of radial elements;
Figure 12 is a lateral elevation view of a second alternative embodiment of the wheel; and
Figure 13 is a further embodiment of the wheel of Figure 12.

With particular reference to the Figures cited above, the reference numeral 1 generally designates a bicycle wheel particularly for a racing and mountain bicycle according to the invention.

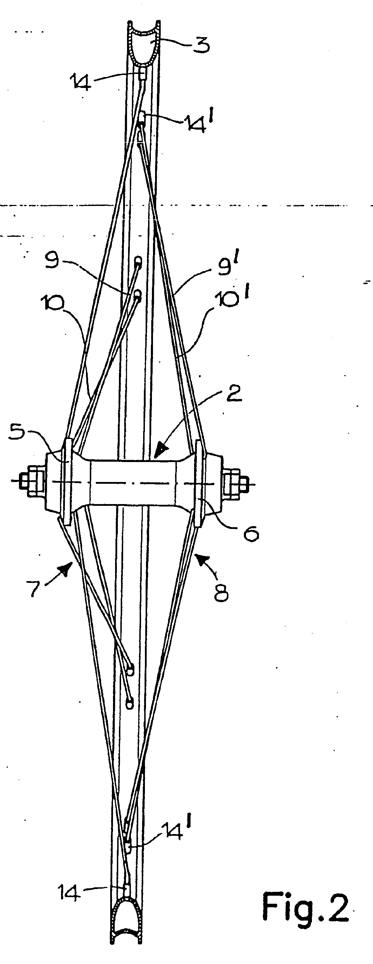

The wheel comprises a hub 2 and a rim 3 which are coaxial and connected by means of a plurality of radial elements 4. As shown in Figure 2, the hub 2 has two opposite ends where a first disc-shaped flange 5 and a second disc-shaped flange 6 are provided, respectively. The radial elements 4 engage the disc-shaped flanges 5,6.

According to the invention, the radial elements 4 are grouped in a first distribution 7 on one side of the wheel and in a second distribution 8 on the other side of the wheel. The first distribution 7 and the second distribution 8 are arranged in such a way to connect, respectively, the first and the second flanges 5, 6 of the hub 2 to the rim 3.

Each of the radial elements 4 of the first distribution 7 is constituted by a first wire spoke 9 and a second wire spoke 10, having respective proximal terminal portions 9a, 10a engaged to the first flange 5 of the hub 2, and respective distal terminal portions 9b, 10b, engaged in respective couples of contiguous fixing seats 14 of the rim 3.

Each of the radial elements 4 of the second distribution 8 is constituted correspondingly by a first wire spoke 9' and a second wire spoke 10', having respective proximal terminal portions 9a', 10a' engaged to the second flange 6 of the hub 2, and respective distal terminal portions 9b', 10b' engaged in respective couples of contiguous fixing seats 14' of the rim 3.

The spokes of one radial element 4 are, by definition, spokes connected to one and the same flange 5 or 6. In other words, if one spoke, for example spoke 9, of one radial element 4 is connected to flange 5, the other spoke 10 of this radial element may not originate from the other flange 6.

Each wire spoke 9, 9', 10, 10' has, in their terminal portions 9a, 9a', 10a, 10a' a head 11 which engage in a respective holes 12 provided in the first and second flanges 5, 6 of the hub 2. Preferably, these heads 11 are connected alternatively to internal and the external surface of the flange 5, 6, for a better balance of the wheel.

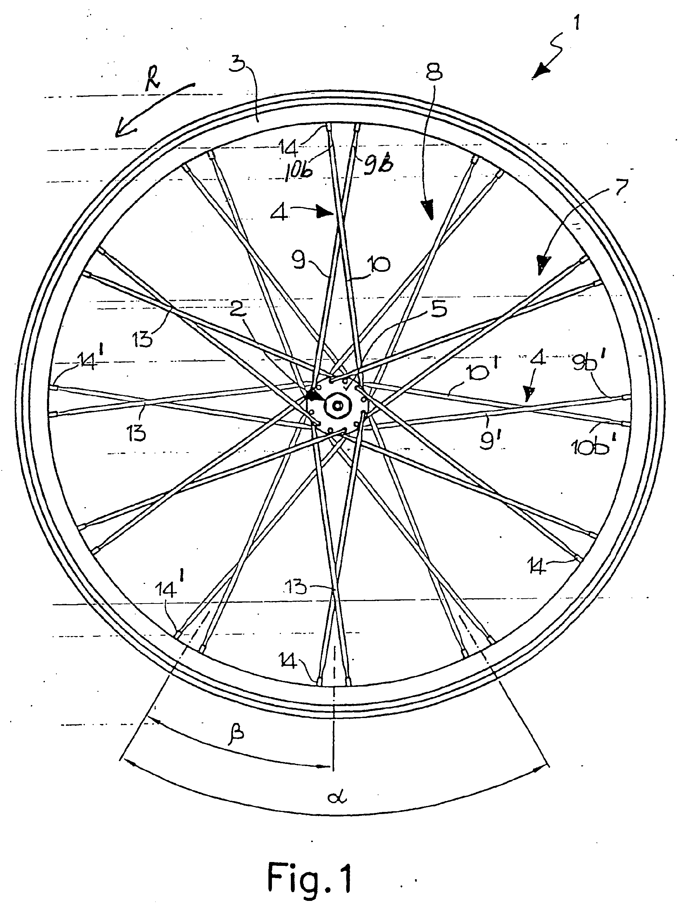

The radial elements 4 of the first distribution 7 and the radial elements 4 of the second distribution 8 are, preferably, mutually angularly equidistant by a first preset angle α. In Figure 1, 2, 3 each of the first and the second distribution 7, 8 have for instance six radial elements 4 which means that the first preset angle α is 60°.

The radial elements 4 of the first distribution 7 are offset respect to the radial elements 4 of the second distribution 8 by a second preset angle β; preferably this second preset angle β is half of the first preset angle α, so the fixing seats to the rim 3 of the first and the second distribution 7,8 are regularly alternate along the internal side of the rim. The second preset angle β may assume different values depending on the needs.

The respective fixing seats 14, 14'are mutually alternately arranged along the rim. The mutual distance between the seats 14 or 14' of one radial element 4 may assume different values as will be explained with respect to the embodiments below. The pairs of seats 14 or 14' are arranged mutually angularly equidistant along the rim 3 by the second preset angle β. The fixing seats 14, 14' may comprise nipples ; rigidly coupled to the internal side of the rim 3 and protruding radially towards the wheel axis, to connect the radial elements or the wire spokes 9,10; 9', 10', respectively, of the first and second distributions 7, 8 respectively to the first and the second-flanges 5, 6 of the hub 2. Each nipple may have an internal thread into which terminal threaded portions 9b, 9b', 10b, 10b' of the spokes 9, 9', 10, 10' engage.

The arrangement of the first and-second distributions 7, 8 of radial elements 4 is meant to simulate the dynamical behavior of the arms of a monolithic wheel. However, the distance between the seats of a pair of spokes and the distance between the seats of different pairs of spokes may be varied to achieve various design or appearance effects while keeping the mechanical stability of the wheel. The distributions 7, 8 of spokes 9, 9', 10, 10' on both sides of the wheel connected to the rim by couples of nipples in the seats 14 are mutually alternating which confers the dynamical behavior of a monolithic wheel to the wheel according to the invention in terms of rigidity and mechanical strength; at the same time the wheel has a low weight.

In use, the behavior of radial elements 4 comprising pairs of spokes 9, 10, functionally simulates the properties of the spokes typically provided in monolithic-type wheels as long as the forces exerted by the spokes to the rim are balanced within the distributions of the radial elements (on one side each of the wheel) and between the two distributions of the radial elements (from one side to the other). Moreover, radial elements -providing the-same-characteristics as obtained-in-monolithic-wheels are obtained through more economic processes and require a lower amount of material.

As shown in Figure 1, the first and the second wire spoke 9, 10 of each radial element 4 are coupled to their fixing seats so that they cross each other, and they are in mutual contact with-each other at crossing points 13.

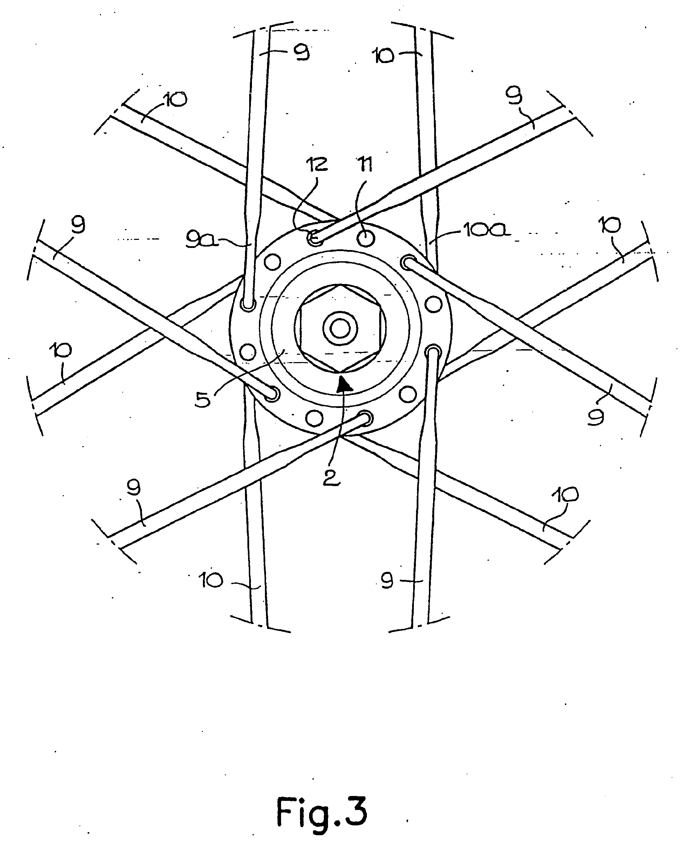

In the embodiment of Figures 1,2, 3 showing a wheel having six radial elements 4 for each distribution 7, 8, twelve holes 12 are, for instance, arranged along the periphery of each flange 5, 6 and are mutually angularly equidistant. The wire spokes, 9, 10 of a radial element 4 are anchored in holes 12 which are five holes apart as can be seen in Figure 3. Of the seats for one pair of spokes 9, 10 of a radial element 4, the seat of the spoke 9 in the rim is; in the running direction R of the wheel, behind the seat of the spoke 10 in the rim, and the anchoring hole of the spoke 9 in the flange of the hub is, in the running direction R of the wheel, in front of the anchoring hole of the spoke 10 in the flange of the hub. Therefore, the spokes 9, 10 cross on their way from the flanges 5,6 to the rim 2. In general, for wheels having a high number of radial elements, the spokes 9, 10 are engaged in the holes 12 so that the first spoke 9 of each odd element 4 (first, third, fifth) cross with the second spoke 10 of the odd element immediately preceding; in the same way, the first spoke 9 of each even element 4 (second, fourth, sixth) cross with the second spoke 10 of the even element immediately preceding.

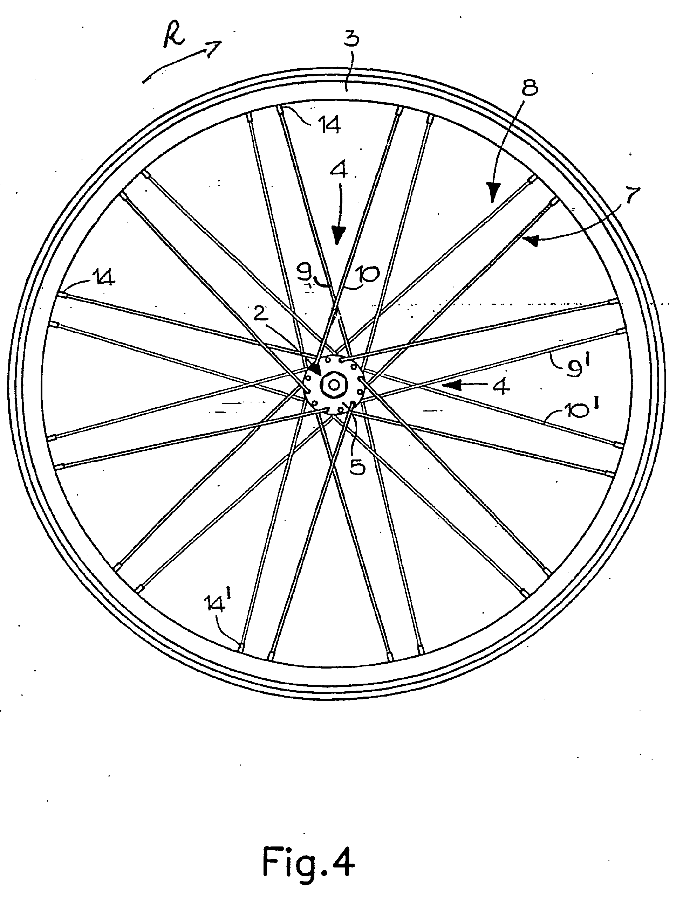

Figure 4 shows an embodiment where the distance between the seats of a pair of spokes 9, 10 forming a radial element 4 is relatively large which give the wheel a distictly different appearance. The wheel again has six radial elements 4 for each distribution 7, 8, and twelve holes 12 are, for instance, arranged along the periphery of each flange 5, 6 and are mutually angularly equidistant. The wire spokes 9, 10 of a radial element 4 are anchored in holes 12 which are three holes apart as-can be seen in Figure 4. Of the seats for one pair of spokes 9, 10 of a radial element 4, the seat of the spoke 9 in the rim is, in the running direction R of the wheel, behind the seat of the spoke 10 in the rim, and the anchoring hole of the spoke 9 in the flange of the hub is, in the running direction R of the wheel, in front of the anchoring hole of the spoke 10 in the flange of the hub. Therefore, the spokes 9, 10 cross on their way from the flanges 5,6 to the rim 2.

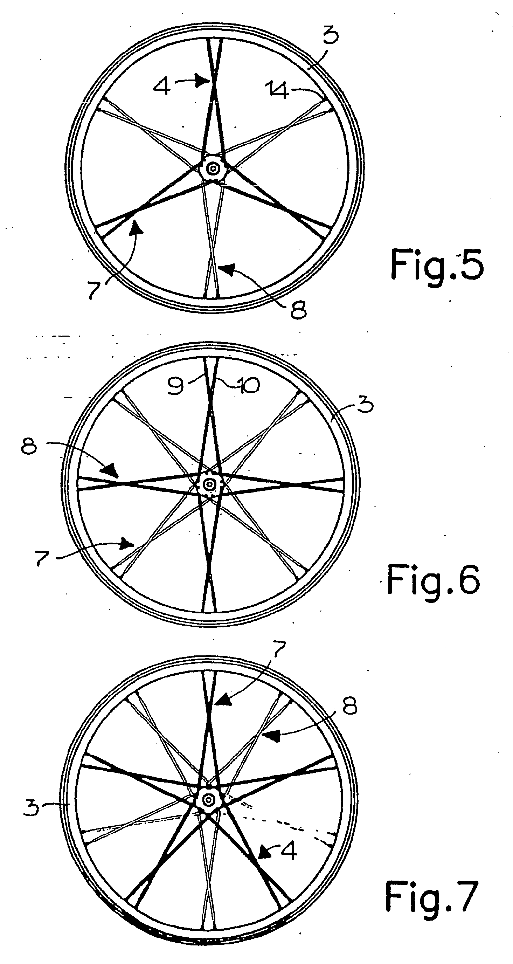

Figures 5, 6, 7 shown further embodiments of the wheel according to the invention. These embodiments have different numbers of radial elements 4 for each distribution 7, 8. The embodiment of Figure 5 has three radial elements (uniformly angularly spaced from each other through a first angle α of 120 degrees) for each distribution; the embodiment of Figure 6 is provided with four radial elements angularly spaced apart through a right angle for each distribution. In the embodiment of Figure 7 the wheel has five radial elements for each distribution.

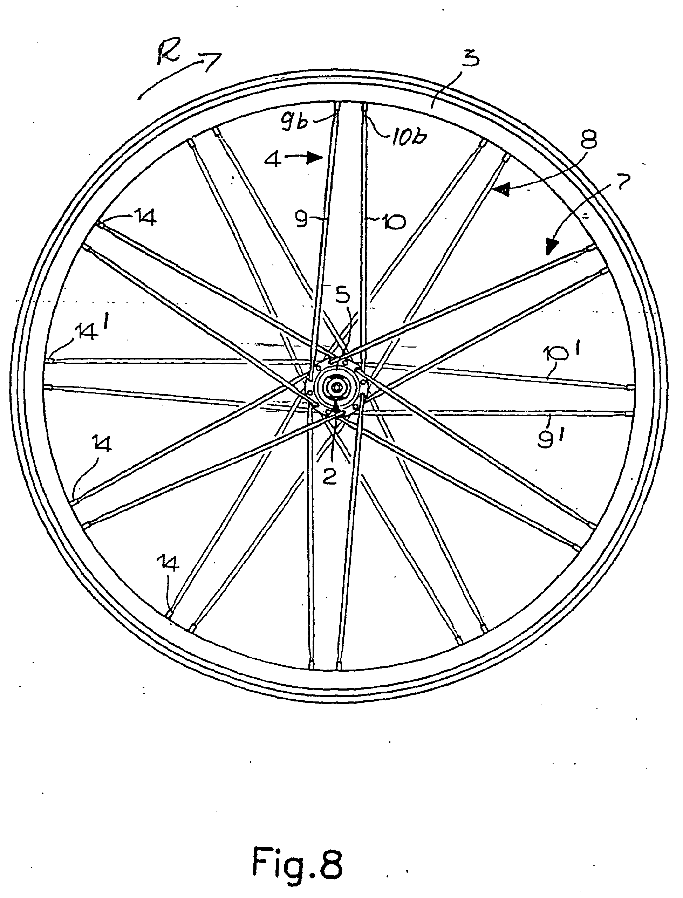

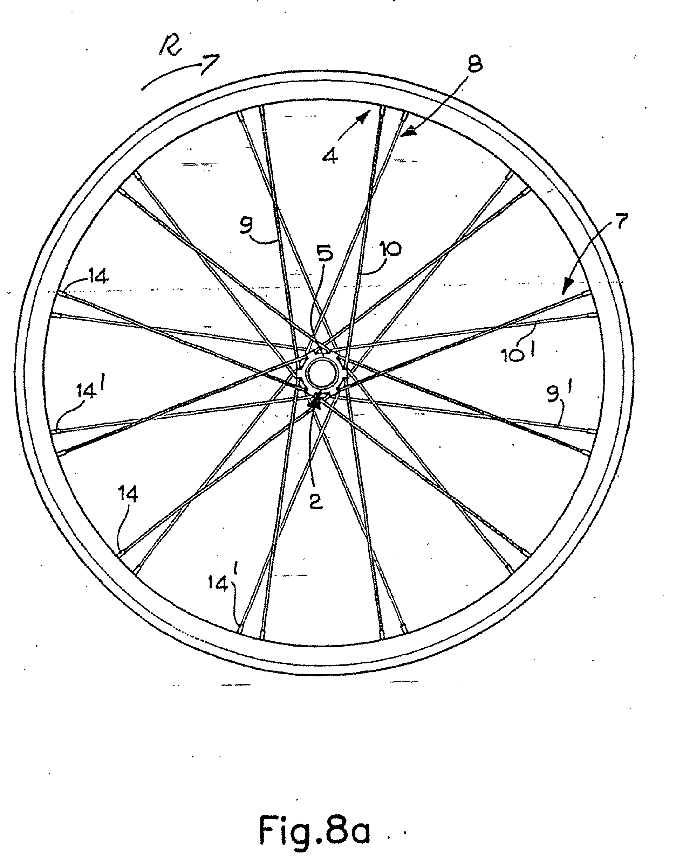

In Figure 8 a first alternative embodiment of the wheel is shown, in which the wheel is provided with six radial elements 4 in each distribution 7, 8 and in which the first and the second spoke 9, 10 of each element are slightly convergent toward the seats 14. The wheel again has six radial elements 4 for each distribution 7, 8, and twelve holes 12 are, for instance, arranged along the periphery of each flange 5, 6 and are mutually angularly equidistant. The wire spokes 9, 10 of a radial element 4 are anchored in holes 12 which are five holes apart as can be seen in Figure 8. Of the seats 14 for one pair of spokes 9, 10 of a radial element 4, the seat of the spoke 9 in the rim is, in the running direction R of the wheel, behind the seat of the spoke 10 in the rim, and the anchoring hole of the spoke 9 in the flange of the hub is, in the running direction R of the wheel, also behind the anchoring hole of the spoke 10 in the flange of the hub. Therefore, the spokes 9, 10 do not cross on their way from the flanges 5,6 to the rim 2.

In the embodiment of Figure 8a, the first and the second spokes 9, 10 of a radial element 4 are-slightly divergent. The wheel again-has-six radial elements 4 for each distribution 7, 8, and twelve holes 12 are arranged along the periphery of each flange 5, 6 and are mutually angularly equidistant. The wire spokes 9, 10 of a radial element 4 are anchored in holes 12 which are five holes apart as can be seen in Figure 8a. Of the seats 14 for one pair of spokes 9, 10 of a radial element 4, the seat of the spoke 9 in the rim is, in the running direction R of the wheel, behind the seat of the spoke 10 in the rim, and the anchoring hole of the spoke 9 in the flange of the hub is, in the running direction R of the wheel, also behind the anchoring hole of the spoke 10 in the flange of the hub. Therefore, the spokes 9, 10 of one radial element 4 do not cross on their way from the flanges 5,6 to the rim 2. However, due to the spread or divergent arrangement of the spokes 9, 10 of one radial element 4, the appearance of the wheel as viewed from the side is similar to the appearance of the wheel of Figure 1.

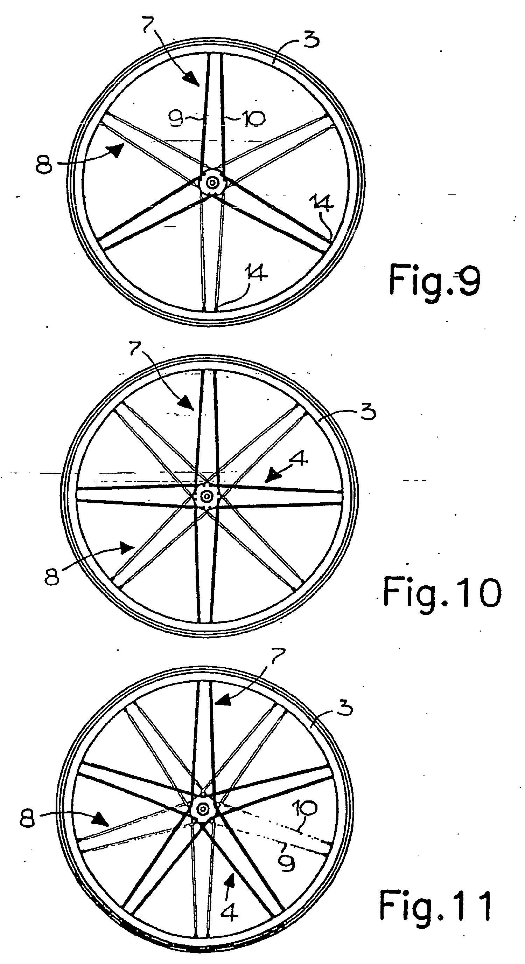

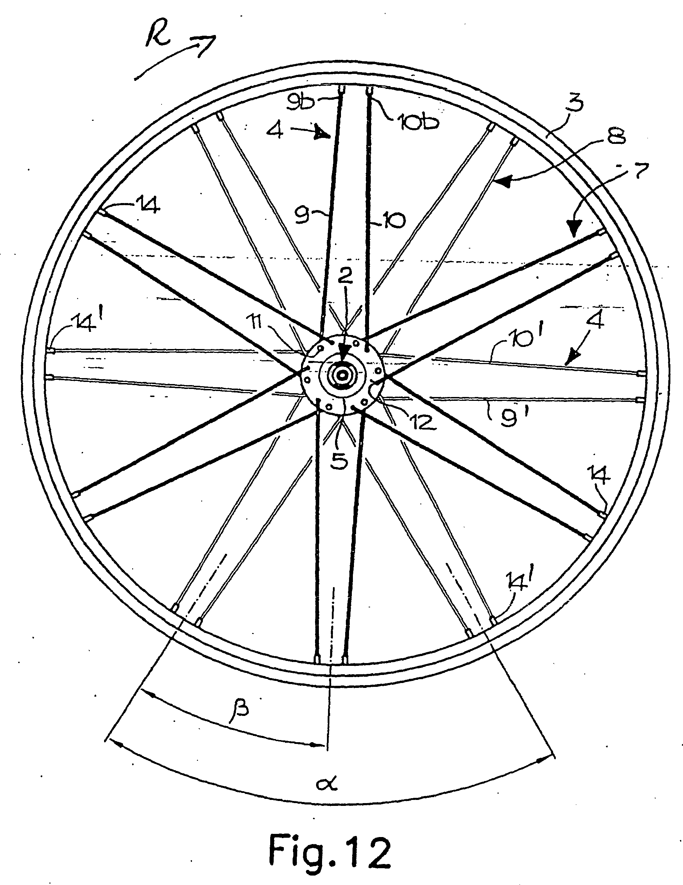

Figures 9, 10, 11 show further embodiments of the wheel of Figure 8. In these embodiments the wheel is provided respectively with three (Figure 9), four (Figure 10) and five (Figure 11) radial elements for each distribution 7, 8.

Figure 12 shows a second alternative embodiment of the wheel, with six radial elements 4 for each distribution 7, 8 and with spokes 9, 10 slightly convergent. This wheel is provided with a hub with flanges 5, 6 having an lager diameter. The spokes are engaged in the -holes -1-2- in such a way that, for each distribution 7, 8 of radial elements 4, a simple crossing of the first spoke 9 of each element is obtained close to the flanges 5, 6 with the second spoke 10 of an element immediately adjacent thereto. The number of radial elements provided in the wheel of Figure 12, may be varied.

The wheel of Figure 12 has six radial elements 4 for each distribution 7, 8, arid twelve holes 12 are arranged along the periphery of each flange 5, 6 and are mutually angularly equidistant. The wire spokes 9, 10 of a radial element 4 are anchored in holes 12 which are three holes apart, as can be seen in Figure 12. Of the seats 14 for one pair of spokes 9, 10 of a radial element 4, the seat of the spoke 9 in the rim is, in the running direction R of the wheel, behind the seat of the spoke 10 in the rim, and the anchoring hole of the spoke 9 in the flange of the hub is, in the running direction R of the wheel, also behind the anchoring hole of the spoke 10 in the flange of the hub. Therefore, the spokes 9, 10 of one radial element 4 do not cross on their way from the flanges 5,6 to the rim 2.

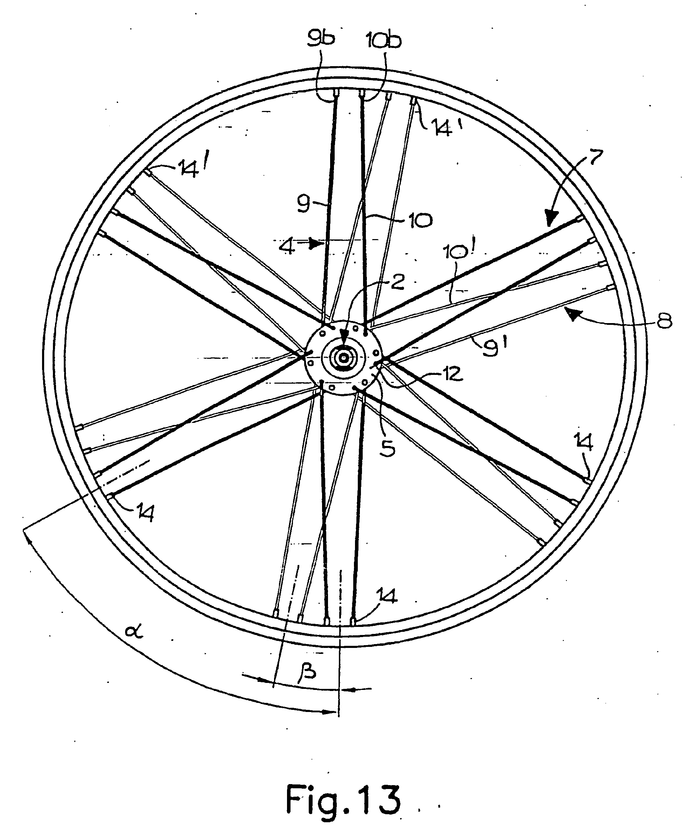

The embodiment of Figure 13 shows that, as mentioned above, the second predetermined angle β can be different from half of the first preset angle α In the illustrated embodiment the second preset angle β is less than half the first preset angle α

In the embodiments shown in Figures 8 - 13 the first and the second spoke 9, 10 of each radial elements 4 may be substantially parallel, and held in position by anchoring seats 14 (nipples) arranged no longer in pairs but substantially uniformly angularly spaced from each other, while still achieving the same technical effect.

The invention thus conceived is susceptible of numerous modifications and variations within the scope of the invention. Thus, it should be noted that the spokes 9, 10 in the above described embodiments can have any desired shape, dimensions, and geometry. In practice, the materials used in the wheel, as well as the shapes and the dimensions, may be any according to the requirements. In the examples of embodiment above, individual features, presented in relation to specific examples, may actually be interchanged with features that exist in other embodiments.

## Claims

1. Bicycle wheel, in particular for racing and mountain bicycles, which comprises a hub (2) and a rim (3) connected with by means of a plurality of radial elements (4), wherein said radial elements (4) are grouped in a first distribution (7), in which said elements are arranged on one side of the wheel, and a second distribution (8), in which said elements are arranged on the other side of the wheel, said first and second distribution (7, 8) connecting said rim (3) to respective ends of said hub (2), the radial elements (4) of said first distribution (7) being connected to said rim (3) in respective fixing seats (14) which are disposed alternate to the fixing seats (14) of the radial elements (4) of said second distribution (8) along said rim (3), wherein first and second spokes (9, 10) of a radial element (4)cross each other, or wherein said first and second spoke (9, 10) of one radial element (4) are slightly divergent toward said couple of fixing seats (14).

2. The wheel according to any of the claim 1, wherein the radial elements (4) of said first distribution (7) and the radial elements (4) of said second distribution (8) are mutually angularly equidistant on each side of a wheel, by a first preset angle α, and wherein the elements of said first distribution (7) being offset by a second preset angle β with respect to said second distribution (8).

3. The wheel according to claim 2, wherein said second preset angle β is half of said first preset angle α.

4. Bicycle wheel, in particular for racing and mountain bicycles, which comprises a hub (2) and a rim (3) connected with by means of a plurality of radial elements (4), wherein said radial elements (4) are grouped in a first distribution (7), in which said elements are arranged on one side of the wheel, and a second distribution (8), in which said elements are arranged on the other side of the wheel, said first and second distribution (7, 8) connecting said rim (3) to respective ends of said hub (2), the radial elements (4) of said first distribution (7) being connected to said rim (3) in respective fixing seats (14) which are disposed alternate to the fixing seats (14) of the radial elements (4) of said second distribution (8) along said rim (3), wherein said first and second spoke (9, 10) of one radial element (4) are slightly convergent toward said couple of fixing seats (14) or are substantially parallel to each other, and wherein the radial elements (4) of said first distribution (7) and the radial elements (4) of said second distribution (8) are mutually angularly equidistant on each side of a wheel, by a first preset angle α, and wherein the elements of said first distribution (7) being offset by a second preset angle β with respect to said first distribution (7), wherein the angle β is less than half of the angle α.

5. The wheel according to one of the proceeding claims, wherein each of said radial elements (4) is constituted by a first and a second wire spoke (10) having respective terminal proximal portions (9a, 10a) connected to said hub (2) and respective terminal distal portions (9b, 10b) connected to said rim (3) in respective pairs of said fixing seats (14).

6. The wheel according to claim 5, wherein said fixing seats (14) are constituted by nipples rigidly coupled to said rim (3) and having an internal thread in which engage said spokes.

## Patentansprüche

1. Rad für ein Fahrrad, insbesondere für Rennräder und Mountainbikes, welches eine Nabe (2) und eine Felge (3) umfasst, die mit Hilfe von radialen Elementen (4) miteinander verbunden sind, wobei die radialen Elemente (4) in einer ersten Verteilung (7), in der die Elemente auf einer Seite des Rades angeordnet sind, und einer zweiten Verteilung (8) gruppiert sind, in der die Elemente auf der anderen Seite des Rades angeordnet sind, wobei die erste und zweite Verteilung (7, 8) die Felge mit jeweiligen Enden der Nabe (2) verbinden, wobei die radialen Elemente (4) der ersten Verteilung (7) an jeweiligen Befestigungssitzen (14) mit der Felge (3) verbunden sind, die abwechselnd zu den Befestigungssitzen (14) der radialen Elemente (4) der zweiten Verteilung (8) entlang der Felge (3) angeordnet sind, wobei erste und zweite Speichen (9, 10) eines radialen Elementes (4) einander kreuzen, oder wobei die erste und zweite Speiche (9, 10) eines radialen Elementes (4) in Richtung des Paares von Befestigungssitzen (14) leicht auseinander gehen.

2. Rad nach Anspruch 1, wobei die radialen Elemente (4) der ersten Verteilung (7) und die radialen Elemente (4) der zweiten Verteilung (8) auf jeder Seite des Rades zueinander den gleichen Winkelabstand eines ersten vorgegebenen Winkels α aufweisen, und wobei die Elemente der ersten Verteilung (7) um einen zweiten vorgegebenen Winkel β im Bezug auf die zweite Verteilung (8) versetzt sind.

3. Rad nach Anspruch 2, wobei der zweite vorgegebene Winkel β die Hälfte des ersten vorgegeben Winkels α ist.

4. Rad für ein Fahrrad, insbesondere für ein Rennrad oder ein Mountainbike, welches eine Nabe (2) und eine Felge (3) umfasst, die mit Hilfe einer Vielzahl von radialen Elementen (4) miteinander verbunden sind, wobei die radialen Elemente (4) in einer ersten Verteilung (7), in der die Elemente auf einer Seite des Rades angeordnet sind, und einer zweiten Verteilung (8) gruppiert sind, in der die Elemente auf der anderen Seite des Rades angeordnet sind, wobei die erste und zweite Verteilung (7, 8) die Felge (3) mit den jeweiligen Enden der Nabe (2) verbinden, wobei die radialen Elemente (4) der ersten Verteilung (7) an jeweiligen Befestigungssitzen (14) mit der Felge (3) verbunden sind, die abwechselnd zu den Befestigungssitzen (14) der radialen Elemente (4) der zweiten Verteilung (8) entlang der Felge (3) angeordnet sind, wobei die erste und zweite Speiche (9, 10) eines radialen Elementes (4) in Richtung des Paares von Befestigungssitzen (14) leicht zusammen laufen oder im wesentlichen parallel zueinander sind, und wobei die radialen Elemente (4) der ersten Verteilung (7) und die radialen Elemente (4) der zweiten Verteilung (8) auf jeder Seite des Rades zueinander den gleichen Winkelabstand eines ersten vorgegebenen Winkels α aufweisen, und wobei die Elemente der ersten Verteilung (7) um einen zweiten vorgegebenen Winkel β im Bezug auf die erste Verteilung (7) versetzt sind, wobei der Winkel β kleiner als die Hälfte des Winkels α ist.

5. Rad nach einem der vorangehenden Ansprüche, wobei jedes der radialen Elemente (4) aus einer ersten und einer zweiten Drahtspeiche (10) gebildet wird, welche jeweils proximale Endabschnitte (9a, 10a), die mit der Felge verbunden sind, und jeweils distale Endabschnitte (9b, 10b) haben, die mit der Felge (3) an jeweiligen Paaren von Befestigungssitzen (14) verbunden sind.

6. Rad nach Anspruch 5, wobei die Befestigungssitze (14) von Nippeln gebildet werden, die fest mit der Felge (3) verbunden sind und ein internes Gewinde haben, in das die Speichen eingreifen.

## Revendications

1. Roue de bicyclette, en particulier pour bicyclettes de courses et de terrain, qui comprend un moyeu (2) et une jante (3) connectés par l'intermédiaire d'une pluralité d'éléments radiaux (4), où lesdits éléments radiaux (4) sont groupés dans une première distribution (7), où lesdits éléments sont arrangés sur un côté de la roue, et une seconde distribution (8), où lesdits éléments sont arrangés sur l'autre côté de la roue, ladite première et seconde distribution (7, 8) connectant ladite jante (3) aux extrémités respectives dudit moyeu (2), les éléments radiaux (4) de ladite première distribution (7) étant connectés à ladite jante (3) dans les sièges de fixation respectifs (14) qui sont disposés alternatifs aux sièges de fixation (14) des éléments radiaux (4) de ladite seconde distribution (8) le long de ladite jante (3), où le premier et le second rayon (9, 10) d'un élément radial (4) se croisent l'un avec l'autre, ou où ledit premier et second rayon (9, 10) d'un élément radial (4) sont un peu divergents vers ledit couple de sièges de fixation (14).

2. Roue selon la revendication 1, où les éléments radiaux (4) de ladite première distribution (7) et les éléments radiaux (4) de ladite seconde distribution (8) sont mutuellement équidistants angulairement sur chaque côté d'une roue, par un premier angle pré-établi α, et où les éléments de ladite première distribution (7) étant décalés par un second angle pré-établi β à l'égard de la ladite seconde distribution (8).

3. Roue selon la revendication 2, où ledit second angle pré-établi β est la moitié dudit premier angle pré-établi α.

4. Roue de bicyclette, en particulier pour bicyclettes de courses et de terrain, qui comprend un moyeu (2) et une jante (3) connectés par l'intermédiaire d'une pluralité d'éléments radiaux (4), où lesdits éléments radiaux (4) sont groupés dans une première distribution (7), où lesdits éléments sont arrangés sur un côté de la roue, et une seconde distribution (8), où lesdits éléments sont arrangés sur l'autre côté de la roue, ladite première et seconde distribution (7, 8) connectant ladite jante (3) aux extrémités respectives dudit moyeu (2), les éléments radiaux (4) de ladite première distribution (7) étant connectés à ladite jante (3) dans les sièges de fixation respectifs (14) qui sont disposés alternatifs aux sièges de fixation (14) des éléments radiaux (4) de ladite seconde distribution (8) le long de ladite jante (3), où ledit premier et second rayon (9, 10) d'un élément radial (4) sont un peu convergents vers ledit couple de sièges de fixation (14) ou sont substantiellement parallèles l'un avec l'autre, et où les éléments radiaux (4) de ladite première distribution (7) et les éléments radiaux (4) de ladite seconde distribution (8) sont mutuellement équidistants angulairement sur chaque côté d'une roue, par un premier angle pré-établi α, et où les éléments de ladite première distribution (7) étant décalés par un second angle pré-établi β à l'égard de la ladite première distribution (7), où l'angle β est moins de la moitié de l'angle α.

5. Roue selon l'une des revendications antérieures, où chacun desdits éléments radiaux (4) est constitué par un premier et un second rayon de fil (10) ayant les portions proximales terminales respectives (9a, 10a) connectées audit moyeu (2) et les portions distales terminales respectives (9b, 10b) connectées à ladite jante (3) dans les paires respectives desdites sièges de fixation (14).

6. Roue selon la revendication 5, où lesdits sièges de fixation (14) sont constitués de raccords couplés rigidement à ladite jante (3) et ayant un filet intérieur dans lequel engage lesdits rayons.
